# EUROPEAN PATENT SPECIFICATION

(11) **EP 3 688 864 B1**
(45) Date of publication and mention of the grant of the patent: **15.09.2021**
(21) Application number: 17777582.2
(22) Date of filing: 29.09.2017
(51) Int. Cl.: H02K 19/06, H02K 24/00, H01F 7/14, H02K 26/00, H02K 7/14

(54) **VARIABLE RELUCTANCE ACTUATOR**
STELLGLIED MIT VERÄNDERLICHER RELUKTANZ
ACTIONNEUR À RÉLUCTANCE VARIABLE

(43) Date of publication of application: 05.08.2020
(73) Proprietor: ABB Schweiz AG, 5400 Baden (CH)
(72) Inventor: DELPOZZO, Andrea, 25030 Adro (BS) (IT); REUBER, Christian, 47877 Willich (DE); SIMONIDIS, Christian, 76187 Karlsruhe (DE); FRANTISEK, Ondrej, 68542 Heddesheim (DE); BREISCH, Sebastian, 69239 Neckarsteinach (DE); BIAGINI, Veronica, 68259 Mannheim (DE); BOLOGNESI, Paolo, 56122 Pisa (IT)
(74) Representative: Gregorj S.r.l.
(86) International application number: PCT/EP2017/074908
(87) International publication number: WO 2019/063104

(56) References cited:
- WO-A1-2004/001777
- DE-A1- 4 409 503
- DE-A1- 19 739 068
- JP-A- H11 356 028
- US-A- 3 229 171
- US-A- 3 956 678

## Description

### BACKGROUND

### Technical field

The present invention relates to a rotary electromagnetic actuator featuring a single-coil variable-reluctance structure capable of providing torque in a unique direction within an angular position range smaller than one turn; such actuator is suited for actuating a switchgear, a contactor, or the like.

### Description of the Related Art

Switchgears, contactors and similar devices include pairs of conductive poles (one or more pairs) which can be moved to achieve two different states: open switch, obtained by keeping the poles separated by a suited layer of insulating fluid, such as air; closed switch, obtained by putting in contact the poles in each pair and pressing them.

The relative movement determining such two states takes usually place along a straight path or a rotary trajectory with large radius. It may be achieved using different types of actuation systems, either including or not suited mechanical transmission systems (e.g. leverages, cams etc.) between the actuator and the poles. The mechanism may also include springs or the like to accomplish part of the motion task.

Accordingly, the actuator of such devices is usually required to be either of linear or rotary type and to be able to operate on a limited stroke or angular position interval, which may span from a fraction of a turn up to multiple turns. Moreover, it may be required to provide force or torque in either one or both directions.

The above actuators may have different nature, possibly being powered by any energy sourced such as electricity, compressed air etc. In any case, typically high reliability is required, as well as the capability to reduce at minimum the energy losses especially during steady state conditions that can last long.

It would be desirable a mechanism requiring a simple rotary actuator capable of providing torque in a unique direction while moving along a limited angular span. For such applications, using a common rotary motor capable of providing constant torque at any angular position may turn out useless and expensive, also due to the cost of complex electronic drive required to properly supply them.
A variable reluctance actuator according to the preamble of the claim 1 is disclosed in WO 2004/001777 A1. Another example of variable reluctance actuator is given in US 3 229 171 A.

### BRIEF SUMMARY OF THE INVENTION

The object of the present invention is to provide a rotary electromagnetic actuator optimized for the above described applications when a rotation span smaller than one complete turn and a unidirectional thrusting torque are required.

This and other objects are achieved by a variable reluctance actuator in accordance with claim 1. Such actuator features a simple single-phase variable-reluctance radial-flux structure capable to provide a torque profile suited for the considered application while achieving low manufacturing and implementation costs by using a simple structure and requiring inexpensive materials and requiring a simple electronic control unit.

Dependent claims define possible advantageous embodiments of the invention.

### BRIEF DESCRIPTION OF THE DRAWINGS

Further characteristics and advantages of the variable reluctance actuator according to the invention will be more apparent from the following description of preferred embodiments given as a way of an example with reference to the enclosed drawings in which:
Figures 1a and 1b show perspective views of a stator and a rotor magnetic cores, respectively, of an actuator according to an embodiment of the invention;
Figure 2 is a cross sectional view of the actuator stator and rotor cores shown in Figures 1a and 1b, in an assembled condition, referring to a first rotor position;
Figure 3 is a cross sectional view of the actuator stator and rotor cores shown in Figure 2 referring to a second rotor position corresponding to the end of the stroke;
Figure 4 is a cross sectional view of the actuator in the operating condition shown in Figure 3 with an indication of the magnetic flux density;
Figure 5 is a diagram showing possible trends of the torque provided by the actuator for various values of the supply current.

### DETAILED DESCRIPTION

With reference to the annexed Figures, an actuator according to the invention is indicated with reference 1.

The actuator 1 comprises a stator having a stator core 2 and a rotor having a rotor core 3 rotatable around an axis of rotation R. The rotor core 3 is located inside an empty space 16 in the stator core 2 and the rotor can be supported by means of proper bearings (not shown in the Figures) or the like so that it can freely rotate within a predetermined angular stroke.

The stator and rotor cores 2, 3 are made of ferromagnetic material, preferably laminations. The stator comprises also a single coil winding 4. In accordance with a possible embodiment, the stator core 2 comprises a couple of slots 5 extending along the stator core 2 itself, preferably parallel to the axis of rotation R, where the single coil winding 4 can be housed. According to a possible embodiment, the coil winding 4 is wound on a support 17 which in turn is shaped so to be easily inserted and removed into the stator slots 5.

The rotor core 3 comprises a shaft 6 fixed to the rotor core 3 to support it permitting to rotate around the axis of rotation R, which can be made of ferromagnetic material.

Referring back to the stator core 2, advantageously, it comprises, preferably it forms, a single stator salient pole 7 around which the single coil 4 is wound. Therefore, this device features only one salient pole 7.

Referring now to the rotor core 3, it comprises a single rotor salient pole 8 providing a ferromagnetic path for the flux lines. According to the principle underlying the functioning of a reluctance machine, when the stator pole 8 is energized, a torque is generated which moves the rotor core 3 in the direction that reduces the reluctance. During movements, the rotor salient pole 8 gradually faces the stator salient pole 7 thereby defining an air gap 9 between the rotor salient pole 8 and the stator salient pole 7.

According to the invention, the stator salient pole 7 and the rotor salient pole 8 are shaped such that that the air gap 9 dimension, for example measured in a radial direction with reference to the axis of rotation R considering the same point on the rotor salient pole 8 moving with the rotor core 3, varies as a function of the angular position of the rotor core 3. In this manner, the torque provided by the rotor core 3, and definitively by the shaft 6, can be tuned as a function of the angular position of the rotor core 3.

According to a possible embodiment, the stator salient pole 7 and the rotor salient pole 8 are configured to define respective circular arc profiles, particularly a stator pole profile 10 and a rotor pole profile 11, progressively facing each other during the movements of the rotor. If the stator pole profile 10 and the rotor pole profile 11 had the same radius and the same center lying on the axis of rotation R, the above mentioned varying air gap could not obtained. Therefore, according to a possible embodiment, the center of the circular arc stator pole profile 10 is shifted with respect to the rotor axis of rotation R. In other words, the circular arc stator pole profile 10 is eccentric with respect to the center of rotation. In this manner, irrespective of the position of the center of the circular arc rotor pole profile 11, the air gap 9 dimension varies with the rotor core 3 angular position.

Alternatively or in addition, the center of the circular arc rotor pole profile 11 can be shifted, i.e. be eccentric, with respect to the rotor axis of rotation R.

Therefore, by modifying the position of the center of the circular arc stator pole profile 11 and/or of the circular arc rotor pole profile 12, and/or the respective radiuses, it is possible to modify the air gap 9 profile and, as a consequence, the torque profile as a function of the rotation angle of the rotor core.

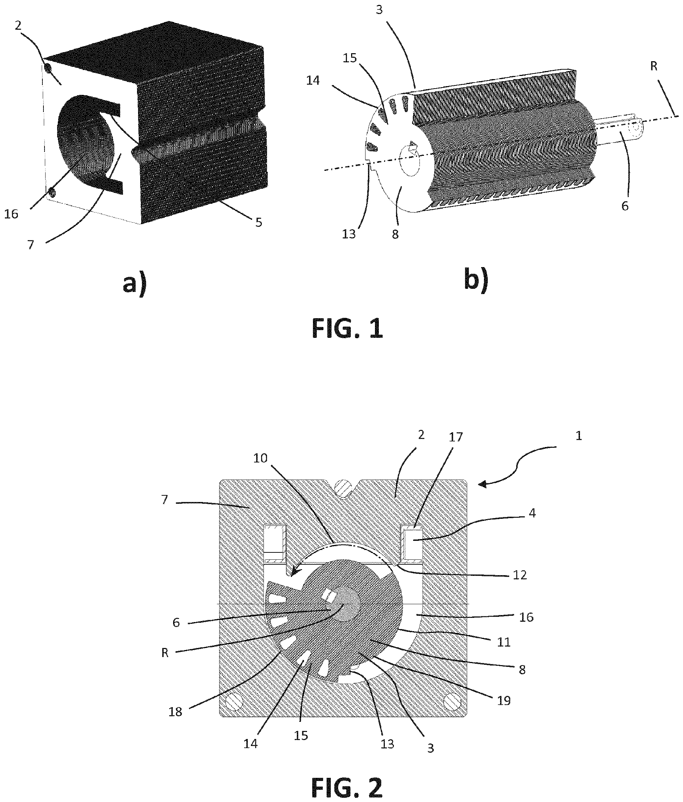

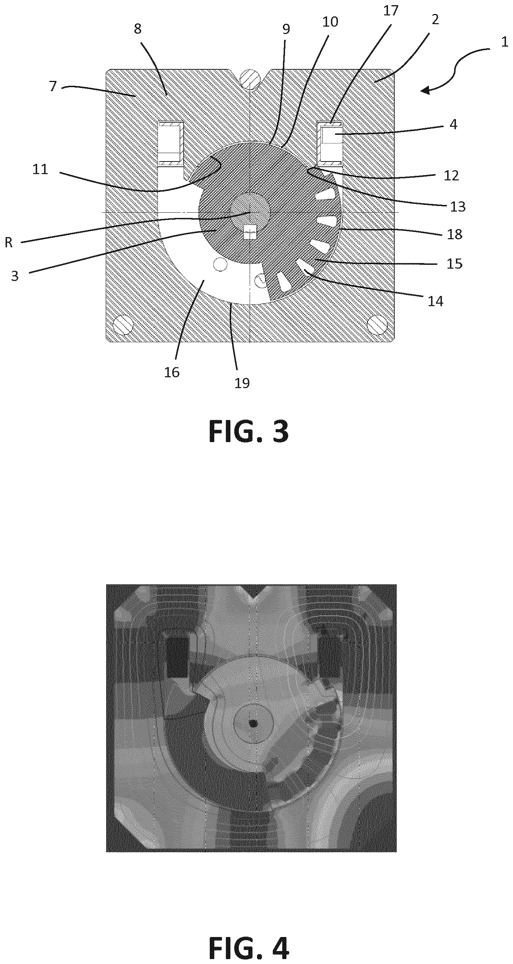

The rotor core 3 is movable from a start position (as shown in Figure 2) to an end position (as shown in Figure 3). According to the invention, when the rotor core 3 is in the start position, the rotor salient pole 8 does not face the stator salient pole 7, and when the rotor core 3 is in the end position, the rotor salient pole 8 faces the stator salient pole 7, particularly the rotor pole profile 11 is fully in front of the stator pole profile 11.

Advantageously, the rotor core angular stroke between the start position and the end position is less than 360°, preferably less than 180°, for example equal to about 120°. The rotor core end position can for example correspond to the closing condition of the switchgear to which the actuator 1 can be connected.

The arrow in Figure 2 shows a possible arc described by one point on the rotor salient pole 8 while the rotor core 3 rotates around the axis of rotation R from the start position to the end position. As already mentioned, the radial distance between the considered point on the rotor salient pole 8 and the stator pole profile 10 changes during the rotor core's rotation. In particular, advantageously, said radial distance decreases from a maximum to a minimum value as the rotor core rotates from the start position to the end position.

Of course, as will be apparent to the skilled person, the variable air gap 9 can be alternatively obtained by configuring the stator pole profile 10 and/or the rotor pole profile with profiles other than a circular arc, such as polynomial profile, elliptic profile or the like.

According to a possible embodiment, the rotor 3 and the stator 2 cores comprise respective end-stop portions such that when the rotor core 3 is in the end position, it is stopped due to the contact with the stator core 2 (Figure 3). For example, the stator 2 and the rotor 3 cores can comprise respective radial stop surfaces 12 and 13 suitable to enter in contact. It is to be noted that, when the actuator 1 is used in connection with a switchgear, the end position, as mentioned above, is the most common operating position, corresponding to a closed position of the switchgear circuit. Under this condition, the stator pole 7 is energized. Thanks to the contact of the magnetic stator and rotor radial surfaces 12, 13 the torque reaches a peak.

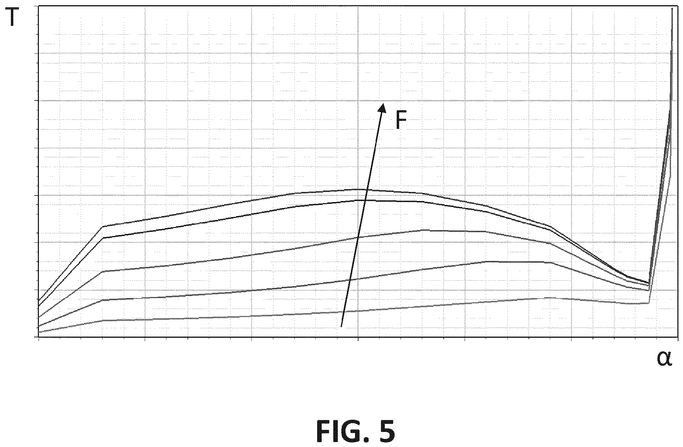

Figure 4 shows the magnetic flux density in the end position of the rotor core. Figure 5 shows a possible torque T trend as a function of the rotor core angular position α from the start position to the end position. As shown, the torque substantially gradually increases and reaches a peak in the end position. The diagram in Figure 5 particularly shows the torque profile for different magneto-motive force F values (i.e. coil number of turns ^{∗} current).

It is to be noted that, according to an alternative possible embodiment not shown in the Figures, the actuator 1 could be eventually modified to accommodate a magnet permitting to hold the end position of the rotor core without any power supply.

According to a possible embodiment, the rotor core 3 comprises an auxiliary pole 15 having a plurality of slots 14 and preferably having a radius greater than the rotor salient pole 8 radius. This achieves an inherent larger section available for flux tubes at larger radius levels inside the auxiliary pole 15 to keep flux density about uniform, while at the same time reducing the rotor inertia. The auxiliary pole 15 is positioned such that it never faces the stator salient pole 7 when the rotor core 3 moves between the start and the end positions. The auxiliary pole 15 preferably defines a circular arc auxiliary pole profile 18 whose center lies on the axis of rotation R. During the rotor core 3 rotations, the auxiliary pole 15 faces a portion 19 of the stator core 2 delimiting the space 16 other than the portion corresponding to the stator pole profile 10, preferably in turn having a circular arc profile whose center lies on the axis of rotation R. The air gap defined between the portion 19 and the auxiliary pole 15 is in this case constant, i.e. it does not vary as a function of the rotor 3 angular position.

From the above description those skilled in the art will appreciate how the single coil operating principle of the actuator according to the invention permits to simplify manufacturing and lower costs in comparison to standard motor drives. In addition, thanks to the single coil design a very simple electronic control unit can be used, in particular a simple on/off control system can be employed which cannot be used in multi-pole actuators.

Furthermore, in the actuator according to the invention the torque profile as a function of the rotor angle can be tuned in the design phase to achieve the desired operating speed during the closing operation.

To the above-mentioned embodiments of the variable reluctance actuator according to the invention, the skilled person, in order to meet specific current needs, can make several additions, modifications, or substitutions of elements with other elements, without however departing from the scope of the appended claims.

## Claims

1. A variable reluctance actuator (1) comprising:
- a stator having a stator core (2) comprising a single stator salient pole (7) with a single coil winding (4);
- a rotor having a rotor core (3) rotatable around an axis of rotation (R) between a start position and an end position and comprising a single rotor salient pole (8), wherein the rotor core angular stroke between the start position and the end position is less than 180°;
- a shaft (6) integrally rotatable with the rotor core (2),
wherein an air gap (9) is formed between the rotor salient pole (8) and the stator salient pole (7) when the rotor core (3) moves between the start and the end positions, the stator salient pole (7) and the rotor salient pole (8) being shaped such that the radial distance between a same point on the rotor salient pole (8) and the stator salient pole (7) at the air gap (9) varies as a function of the angular position of the rotor core (3), **characterized in that** the rotor core (3) is located inside an empty space (16) in the stator core (2), and **in that** when the rotor core (3) is in the start position, the rotor salient pole (8) does not face the stator salient pole (7), and when the rotor core (3) is in the end position, the rotor salient pole (8) faces the stator salient pole (7).

2. Variable reluctance actuator (1) according to claim 1, wherein the stator salient pole (7) is configured to define a circular arc stator pole profile (10), whose center is shifted with respect to the rotor axis of rotation (R).

3. Variable reluctance actuator (1) according to claim 1 or 2, wherein the rotor salient pole (8) is configured to define a circular arc rotor pole profile (11), whose center is shifted with respect to the rotor axis of rotation (R).

4. Variable reluctance actuator (1) according to any of the preceding claims, wherein the stator salient pole (7) and the rotor salient pole (8) are configured such that the radial distance between the same point on the rotor salient pole (8) and the stator pole profile (10) decreases from a maximum to a minimum value as the rotor core (3) rotates from the start position to the end position.

5. Variable reluctance actuator (1) according to any of the preceding claims, wherein the stator (2) and the rotor (3) cores comprise respective stop surfaces (12, 13) suitable to enter in contact such that when the rotor core (3) is in the end position, it is stopped due to the contact of said stop surfaces (12,13).

6. Variable reluctance actuator (1) according to any of the preceding claims, wherein the stator core (2) comprises a couple of axial stator slots (5) housing the single coil winding (4).

7. Variable reluctance actuator (1) according to any of the preceding claims, wherein the rotor core (3) comprises an auxiliary pole (15) having a plurality of rotor slots (14).

## Patentansprüche

1. Variabler Reluktanzaktor (1), der Folgendes umfasst:
- einen Stator, der einen Statorkern (2) aufweist, der einen einzelnen ausgeprägten Statorpol (7) mit einer einzelnen Spulenwicklung (4) umfasst;
- einen Rotor, der einen Rotorkern (3) aufweist, der um eine Drehachse (R) zwischen einer Startposition und einer Endposition drehbar ist und einen einzelnen ausgeprägten Rotorpol (8) umfasst, wobei der Rotorkernwinkelhub zwischen der Startposition und der Endposition kleiner als 180° ist;
- eine Welle (6), die mit dem Rotorkern (2) einstückig drehbar ist,
wobei ein Luftspalt (9) zwischen dem ausgeprägten Rotorpol (8) und dem ausgeprägten Statorpol (7) ausgebildet ist, wenn sich der Rotorkern (3) zwischen der Start- und der Endposition bewegt, der ausgeprägte Statorpol (7) und der ausgeprägte Rotorpol (8) derart geformt sind, dass der radiale Abstand zwischen einem gleichen Punkt auf dem ausgeprägten Rotorpol (8) und dem ausgeprägten Statorpol (7) an dem Luftspalt (9) in Abhängigkeit von der Winkelposition des Rotorkerns (3) variiert, **dadurch gekennzeichnet, dass** sich der Rotorkern (3) innerhalb eines leeren Raums (16) in dem Statorkern (2) befindet, und dass, wenn sich der Rotorkern (3) in der Startposition befindet, der ausgeprägte Rotorpol (8) nicht dem ausgeprägten Statorpol (7) zugewandt ist, und wenn sich der Rotorkern (3) in der Endposition befindet, der ausgeprägte Rotorpol (8) dem ausgeprägten Statorpol (7) zugewandt ist.

2. Variabler Reluktanzaktor (1) nach Anspruch 1, wobei der ausgeprägte Statorpol (7) konfiguriert ist, um ein kreisbogenförmiges Statorpolprofil (10) zu definieren, dessen Mittelpunkt in Bezug auf die Rotorrotationsachse (R) verschoben ist.

3. Variabler Reluktanzaktor (1) nach Anspruch 1 oder 2, wobei der ausgeprägte Rotorpol (8) konfiguriert ist, um ein kreisbogenförmiges Rotorpolprofil (11) zu definieren, dessen Mittelpunkt in Bezug auf die Rotorrotationsachse (R) verschoben ist.

4. Variabler Reluktanzaktor (1) nach einem der vorhergehenden Ansprüche, wobei der ausgeprägte Statorpol (7) und der ausgeprägte Rotorpol (8) derart konfiguriert sind, dass der radiale Abstand zwischen demselben Punkt auf dem ausgeprägten Rotorpol (8) und dem Statorpolprofil (10) von einem Maximal- auf einen Minimalwert abnimmt, während sich der Rotorkern (3) von der Startposition in die Endposition dreht.

5. Variabler Reluktanzaktor (1) nach einem der vorhergehenden Ansprüche, wobei die Stator(2)- und die Rotor(3)kerne jeweilige Anschlagoberflächen (12, 13) umfassen, die geeignet sind, derart in Kontakt zu treten, dass, wenn der Rotorkern (3) sich in der Endposition befindet, er aufgrund des Kontakts der Anschlagoberflächen (12, 13) gestoppt wird.

6. Variabler Reluktanzaktor (1) nach einem der vorhergehenden Ansprüche, wobei der Statorkern (2) ein Paar axialer Statornuten (5) umfasst, das die einzelne Spulenwicklung (4) aufnimmt.

7. Variabler Reluktanzaktor (1) nach einem der vorhergehenden Ansprüche, wobei der Rotorkern (3) einen Hilfspol (15), der mehrere Rotornuten (14) aufweist, umfasst.

## Revendications

1. Actionneur à réluctance variable (1) comprenant :
- un stator ayant un noyau de stator (2) comprenant un unique pôle saillant de stator (7) avec un unique enroulement de bobine (4) ;
- un rotor ayant un noyau de rotor (3) pouvant tourner autour d'un axe de rotation (R) entre une position de départ et une position finale et comprenant un unique pôle saillant de rotor (8), la course angulaire du noyau de rotor entre la position de départ et la position finale étant inférieure à 180° ;
- un arbre (6) pouvant tourner d'un seul tenant avec le noyau de rotor (2),
un entrefer (9) étant formé entre le pôle saillant de rotor (8) et le pôle saillant de stator (7) lorsque le noyau de rotor (3) se déplace entre les positions de départ et finale, le pôle saillant de stator (7) et le pôle saillant de rotor (8) étant formés de telle sorte que la distance radiale entre un même point sur le pôle saillant de rotor (8) et le pôle saillant de stator (7) au niveau de l'entrefer (9) varie en fonction de la position angulaire du noyau de rotor (3), **caractérisé en ce que** le noyau de rotor (3) est situé à l'intérieur d'un espace vide (16) dans le noyau de stator (2), et **en ce que** lorsque le noyau de rotor (3) se trouve dans la position de départ, le pôle saillant de rotor (8) ne fait pas face au pôle saillant de stator (7), et lorsque le noyau de rotor (3) se trouve en position finale, le pôle saillant de rotor (8) fait face au pôle saillant de stator (7).

2. Actionneur à réluctance variable (1) selon la revendication 1, le pôle saillant de stator (7) étant conçu pour définir un profil de pôle de stator en arc de cercle (10), dont le centre est décalé par rapport à l'axe de rotation du rotor (R).

3. Actionneur à réluctance variable (1) selon la revendication 1 ou 2, le pôle saillant de rotor (8) étant conçu pour définir un profil de pôle de rotor en arc de cercle (11), dont le centre est décalé par rapport à l'axe de rotation du rotor (R).

4. Actionneur à réluctance variable (1) selon l'une quelconque des revendications précédentes, le pôle saillant de stator (7) et le pôle saillant de rotor (8) étant conçus de telle sorte que la distance radiale entre le même point sur le pôle saillant de rotor (8) et le profil de pôle du stator (10) diminue d'une valeur maximale à une valeur minimale lorsque le noyau de rotor (3) tourne de la position de départ à la position finale.

5. Actionneur à réluctance variable (1) selon l'une quelconque des revendications précédentes, les noyaux de stator (2) et de rotor (3) comprenant des surfaces d'arrêt respectives (12, 13) adaptées pour entrer en contact de telle sorte que lorsque le noyau de rotor (3) est en position finale, il est arrêté grâce à l'entrée en contact avec lesdites surfaces d'arrêt (12, 13).

6. Actionneur à réluctance variable (1) selon l'une quelconque des revendications précédentes, le noyau de stator (2) comprenant deux encoches de stator axiales (5) logeant l'unique enroulement de bobine (4).

7. Actionneur à réluctance variable (1) selon l'une quelconque des revendications précédentes, le noyau de rotor (3) comprenant un pôle auxiliaire (15) ayant une pluralité d'encoches de rotor (14).
